# EUROPÄISCHE PATENTSCHRIFT

(11) **EP 1 907 460 B1**
(45) Veröffentlichungstag und Bekanntmachung des Hinweises auf die Patenterteilung: **02.12.2009**
(21) Anmeldenummer: 06762821.4
(22) Anmeldetag: 26.07.2006
(51) Int. Cl.: C08J 7/04

(54) **CYCLOOLEFIN-COPOLYMER-FLASCHE MIT EINEM KRATZFESTEN ÜBERZUG**
CYCLOOLEFIN COPOLYMER BOTTLE WITH A SCRATCH-RESISTANT COATING
BOUTEILLE EN COPOLYMERE DE CYCLO-OLEFINE POURVUE D'UN REVETEMENT ANTIRAYURES

(30) Priorität: 26.07.2005 DE 102005034892
(43) Veröffentlichungstag der Anmeldung: 09.04.2008
(73) Patentinhaber: Hexal AG, 83607 Holzkirchen (DE)
(72) Erfinder: ROTH, Michaela, 83677 Reichersbeuern (DE); MEYER-WÜLFING, Katrin, 81241 München (DE)
(74) Vertreter: Forstmeyer, Dietmar
(86) Internationale Anmeldenummer: PCT/EP2006/007374
(87) Internationale Veröffentlichungsnummer: WO 2007/012474

(56) Entgegenhaltungen:
- EP-A- 0 450 625
- EP-A- 1 479 379

## Beschreibung

Die Erfindung betrifft Cycloolefin-Copolymer-Flaschen mit einem kratzfesten Überzug.

Behälter aus Kunststoff haben gegenüber Glasbehältern den Vorteil eines geringen Gewichts und einer hohen Bruchsicherheit. Nachteilig bei Kunststoffbehältern ist jedoch deren hohe Kratzempfindlichkeit.

Kunststoff-Flaschen werden vielfach für pharmazeutische Zubereitungen verwendet. Für die Herstellung der Präparate werden die Kunststoff-Flaschen häufig gemeinsam mit der pharmazeutischen Zubereitung sterilisiert. Handelsübliche Kunststoff-Flaschen enthalten Polyethylenpropylen (PEP) oder Polypropylen (PP) und sind nicht autoklavierbar, sondern müssen strahlensterilisiert oder mit Ethylenoxid sterilisiert werden. Diese Kunststoff-Flaschen haben zudem den Nachteil, daß sie milchig sind und aus diesem Grund eine visuelle Inspektion des Flascheninhalts nicht möglich ist. Eine Flasche aus Cyloolefin-Copolymer (COC) ist klar, zeigt aber eine hohe Kratzempfindlichkeit.

Aufgabe der Erfindung ist die Bereitstellung einer klaren, beschichteten Kunststoff-Flasche deren äußere Oberfläche kratzunempfindlich ist. Die Kunststoff-Flaschen sollen auf den üblichen Abfüllanlagen für flüssige pharmazeutische Zubereitungen oder pharmazeutische Pulver einsetzbar sein. Zudem soll die Kunststoff-Flasche autoklavierbar sein.

Die der Erfindung zugrundeliegende Aufgabe wird nun durch eine Flasche aus Kunststoff gelöst, umfassend oder bestehend aus Cycloolefin-Copolymer, mit einer Beschichtung aus einem anorganisch-organischen Hybrid-Polymer (ORMOCER-Beschichtung).

Überraschenderweise wurde gefunden, daß Kunststoff-Flaschen aus Cycloolefin-Copolymer mit einer ORMOCER-Beschichtung autoklavierbar sind und keine Kratzempfindlichkeit aufweisen. Der ORMOCER-Überzug haftet zudem gut auf der COC-Oberfläche.

Für die erfindungsgemäßen Flaschen kann das Cycloolefin-Copolymer ein Copolymer von Ethylen und Cycloolefin sein.

Für die erfindungsgemäßen Flaschen kann das Ethylen unsubstituiert oder substituiert sein.

Ferner kann für die erfindungsgemäße Flasche das Cycloolefin Dicylopentadien oder ein Dicyclopentadien-Derivat sein.

Für die erfindungsgemäße Flasche kann das Dicylopentadien oder Dicyclopentadien-Derivat unsubstituiert oder substituiert sein.

Ferner kann für die erfindungsgemäße Flasche der Kunststoff umfassen oder bestehen aus einem Gemisch aus dem Cycloolefin-Polymer und einem Polymer aus der durch Polypropylen, Polyvinylchlorid und Polyvinylidenchlorid gebildeten Gruppe.

Ferner kann die erfindungsgemäße Flasche mit einer Hybrid-Polymer-Beschichtung versehen sein umfassend oder bestehend aus
(i) einem hydrolytischen Kondensat, herstellbar aus einem Silan der Formel RₘSiX₄₋ₘ mit den folgenden Bedeutungen:
   R = vernetzbarer organischer Rest
   X = hydrolisierbare und kondensierbare Gruppe
   m = 1 oder 2 oder 3 (wobei 1 bevorzugt ist)
   mit einer Metallverbindung,
(ii) einem Präpolymer, das mit den Resten R des Silans vernetzbar ist,
(iii) einem oder mehreren (insbesondere einem oder zwei) fakultativen nicht-vernetzbaren organofunktionellen Silan(en) und
(iv) einem fakultativen schwerflüchtigen Oxid.

Für die erfindungsgemäße Flasche kann in der Silan-Formel R ein Rest aus der durch Alkyl, Alkenyl, Alkinyl, Aryl, Arylalkyl, Alkylaryl, Arylalkenyl, Alkenylaryl, Arylalkinyl und Alkinylaryl gebildeten Gruppe sein, wobei diese Reste durch ein O-Atom und/oder ein S-Atom und/oder ein N-Atom und/oder eine NH-Gruppe ein- oder mehrfach unterbrochen sein können, oder eine OH-, SH-, oder NH₂-Gruppe endständig aufweisen können.

Für die erfindungsgemäße Flasche können in der Silan-Formel die Reste R unabhängig voneinander einen unsubstituierter Rest oder einen Rest bedeuten, der durch ein oder mehrere Substituenten aus der Gruppe substituiert ist, die durch Halogen-Atome, unsubstituierte Amino-, Amid-, Aldehyd-, Keto-, Alkylcarbonyl-, Carboxy-, Mercapto-, Cyano-, Isocyano-, Cyanato-, Isocyanato-, Hydroxy-, Alkoxy-, Alkoxycarbonyl-, Sulfonsäure-, Phosphorsäure-, Acryl-, Acryloxy-, Methacryl-, Methacryloxy-, Glycidyl-, Glycidyloxy-, Epoxy- und Vinyl-Gruppen und substituierte derartige Gruppen gebildet wird.

Für die erfindungsgemäße Flasche können in der Silan-Formel die Reste X unabhängig voneinander Alkoxy-, Aryloxy-, Acyloxy-, Alkylcarbonyl-, Alkoxycarbonyl-, Hydroxygruppen, Halogen, Wasserstoff oder substituierte oder unsubstituierte Aminogruppen bedeuten.

Für die erfindungsgemäße Flasche kann ein Präpolymer vorgesehen werden, das eine Gruppe R als reaktive Gruppe trägt, wobei R eine Bedeutung gemäß den vorstehenden Ausführungen besitzt.

So kann für die erfindungsgemäße Flasche ein Präpolymer vorgesehen werden, das eine Gruppe R als reaktive Gruppe trägt, wobei R bei dem Präpolymer und bei dem Silan dieselbe Bedeutung besitzt.

Ferner kann es sich bei der erfindungsgemäßen Flasche bei dem Silan und bei dem Präpolymer um die folgenden Kombinationen handeln:
(i) Silan mit Epoxygruppen mit Epoxidharz als Präpolymer und/oder
(ii) Silan mit Vinylresten mit Präpolymer mit vernetzbaren Doppelbindungen und/oder
(iii) Silan mit polymerisierbaren Doppelbindungen mit Präpolymer mit vernetzbaren Doppelbindungen und/oder
(iv) mercaptogruppenhaltiges Silan mit Präpolymer mit vernetzbaren Doppelbindungen und/oder
(v) isocyanatgruppenhaltiges Silan mit Polyol als Präpolymer und/oder
(vi) hydroxylgruppenhaltiges Silan mit Isocyanat als Präpolymer und/oder
(vii) aminogruppenhaltiges Silan mit Epoxidharz als Präpolymer.

So kann die erfindungsgemäße Flasche mit einem hydrolytischen Kondensat eines acrylgruppen-haltiges Silans und mit einem Präpolymer-Acrylat vorgesehen werden.

Ferner kann für die erfindungsgemäße Flasche ein fakultatives nicht-vernetzbares organofunktionelles Silan der Formel R'ₘSiX₄₋ₘ mit den folgenden Bedeutungen vorgesehen werden:
R'= nicht vernetzbarer organischer Rest
X = hydrolisierbare und kondensierbare Gruppe
m = 1 oder 2 oder 3.

Für die erfindungsgemäße Flasche können in der Silan-Formel R' ein Rest aus der durch Alkyl, Cycloalkyl, Aryl, Arylalkyl und Alkylaryl gebildeten Gruppe sein, wobei diese Reste durch ein O-Atom und/oder ein S-Atom und/oder ein N-Atom und/oder eine NH-Gruppe ein- oder mehrfach unterbrochen sein können oder endständig eine OH-, SH- oder NH₂-Gruppe aufweisen können.

Ferner können für die erfindungsgemäße Flasche in der Silan-Formel die Reste R' unabhängig voneinander einen unsubstituierter Rest oder einen Rest bedeuten, der durch ein oder mehrere Substituenten aus der Gruppe substituiert ist, die durch Halogen-Atome, unsubstituierte Amid-, Aldehyd-, Keto-, Alkylcarbonyl-, Carboxy-, Cyano-, Alkoxy- und AlkoxycarbonylGruppen und substituierte derartige Gruppen gebildet wird.

Ferner können für die erfindungsgemäße Flasche in der Silan-Formel R'ₘSiX₄₋ₘ die Reste X unabhängig voneinander Alkoxy-, Aryloxy-, Alkylcarbonyl-, Alkoxycarbonyl-, Hydroxygruppen, Halogen, Wasserstoff oder substituierte oder unsubstituierte Aminogruppen bedeuten.

Ferner kann für die erfindungsgemäße Flasche ein schwerflüchtiges Oxid von Verbindungen von Elementen der Hauptgruppe Ia, IIa, IIIa, IVa und/oder Va oder der Nebengruppe IIb, IIIb, Vb, VIb, VIIb und/oder VIIIb mit Ausnahme von Aluminium vorgesehen werden.

So können für die erfindungsgemäße Flasche B₂O₃, P₂O₅ und/oder SnO₂ vorgesehen werden.

Ferner kann die erfindungsgemäße Flasche mit ABRASIL GA2-30, ABRASIL GA2-35 oder ABRASIL VM-26-IPA2 als Beschichtungsmaterial vorgesehen werden.

Ferner kann die erfindungsgemäße Flasche eine zylindrische oder prismatische oder quadrische Form aufweisen.

Ferner kann es sich bei der erfindungsgemäßen Flasche um eine Durchstechflasche, eine Schraubverschlussflasche oder eine Ampulle handeln.

Ferner kann es sich bei der erfindungsgemäßen Flasche um eine Durchstechflasche oder Schraubverschlussflasche mit einem Volumen von 1 bis 1000 ml handeln.

Ferner kann es sich bei der erfindungsgemäßen Flasche um eine Durchstechflasche mit einem Volumen von 2 bis 100 ml handeln.

Ferner kann es sich bei der erfindungsgemäßen Flasche um eine Ampulle mit einem Volumen von 1 bis 20 ml handeln.

Ferner kann die erfindungsgemäße Flasche mit einer Beschichtung einer Dicke von 1 bis 100 µm, insbesondere 2 bis 30 µm und vorzugsweise 8 bis 20 µm versehen sein.

Schließlich kann die erfindungsgemäße Flasche gefüllt mit einer pharmazeutischen Zubereitung und verschlossen mit einem Verschluß vorgesehen sein.

Nachstehend wird die Erfindung noch näher erläutert.

Der Ausdruck Alkyl bezieht sich auf eine gesättigte, geradkettige oder verzweigte Kohlenwasserstoffgruppe, die insbesondere 1 bis 20 Kohlenstoffatome, vorzugsweise 1 bis 12 Kohlenstoffatome, besonders bevorzugt 1 bis 6 Kohlenstoffatome aufweist, z.B. die Methyl-, Ethyl-, Propyl-, Isopropyl-, n-Butyl-, Isobutyl-, tert-Butyl, n-Hexyl-, 2,2-Dimethylbutyl- oder n-Octyl-Gruppe.

Die Ausdrücke Alkenyl und Alkinyl beziehen sich auf zumindest teilweise ungesättigte, geradkettige oder verzweigte Kohlenwasserstoffgruppen, die insbesondere 2 bis 20 Kohlenstoffatome, vorzugsweise 2 bis 12 Kohlenstoffatome, besonders bevorzugt 2 bis 6 Kohlenstoffatome aufweisen, z. B. die Ethenyl-, Allyl-, Acetylenyl-, Propargyl-, Isoprenyl- oder Hex-2-enyl-Gruppe. Bevorzugt weisen Alkenylgruppen eine oder zwei (besonders bevorzugt eine) Doppelbindungen bzw. Alkinylgruppen eine oder zwei (besonders bevorzugt eine) Dreifachbindungen auf.

Der Ausdruck Cycloalkyl bezieht sich auf eine cyclische Gruppe, die einen oder mehrere Ringe (bevorzugt 1 oder 2) aufweist, und insbesondere 3 bis 14 Ringkohlenstoffatome, vorzugsweise 3 bis 10 Ringkohlenstoffatome enthält. Beispiele sind die Cyclopropyl-, Cyclobutyl-, Cyclopentyl-, und die Cyclohexyl-Gruppe.

Der Ausdruck Aryl bzw. Ar bezieht sich auf eine aromatische Gruppe, die einen oder mehrere Ringe mit insbesondere 6 bis 14 Ringkohlenstoffatomen, vorzugsweise 6 bis 10 (insbesondere 6) Ringkohlenstoffatomen aufweist. Beispiele sind die Phenyl-, Naphthyl- oder Biphenyl-Gruppe.

Die Ausdrücke Arylalkyl , Alkylaryl, Arylalkenyl, Alkenylaryl, Arylalkinyl und Alkinylaryl beziehen sich auf Gruppen, die entsprechend den obigen Definitionen sowohl Aryl- wie auch Alkyl-, Alkenyl- oder Alkinylgruppen enthalten. Konkrete Beispiele sind Toluol, Xylol, Mesitylen, Styrol, Benzyl und Cumol. Bevorzugt enthält so eine Gruppe ein oder zwei aromatische Ringe mit 6 bis 10 Ringkohlenstoffatomen und ein oder zwei Alkyl-, Alkenyl- und/oder Alkinylgruppen mit 1 oder 2 bis 6 Kohlenstoffatomen.

Beispiele für nicht-vernetzbare organofunktionelle Silane sind: Bis-(dimethylamino)methylphenylsilane, Bis-(mono-n-butyl-amino)dimethylsilane, 2-Chloroethyltrichlorosilane, 2-Chloro-ethylmethyldichlorosilane, Di-n-Butyldichlorsilane, Diethyldiethoxysilane, Ethyltrimethoxysilane, 8-Bromooctyltrichlorosilane, 3-Bromopropyltrichlorsilane, t-Butyltrichlorosilane, 1-Chloroethyltrichlorosilane, Chloromethyltrichlorsilane, Chlorophenyltrichlorsilane, Cyclohexyltrichlorsilane, Dimethyldichlorsilane, Diphenyldichlorsilane, Ethyldichlorosilane. Besonders bevorzugt sind Phenyltrimethoxysilan, Aminopropyltriethoxysilan und Propyltrimethoxysilan.

Beispiele für vernetzbare organofunktionelle Silane sind Vinyltrimethoxysilan, Aminopropyltriethoxysilan, Isocyanatopropyltriethoxysilan, Mercaptopropyltrimethoxysilan, Vinyltriethoxysilane, Vinylethyldichlorsilane, Vinylmethyldiacetoxysilane, Vinylmethyldichlorosilane, Vinylmethyldiethoxysilane, Vinyltriacetoxysilane, Vinyltrichlorsilane, Phenylvinyldiethoxysilane, Phenylallyldichlorsilane, 3-Iso-cyanatopropyltriethoxysilane, 3-Isocyanatopropyltriethoxysilane, Methacryloxypropenyltrimethoxylsilane, 3-Methacryloxypropyltrimethoxysilane. Besonders bevorzugt ist Methacryloxypropyltrimethoxysilan und 3-Glycidyloxypropyltrimethoxysilan.

Beispiele für Metallverbindungen sind: TiCl₄, ZrCl₄, Ti(OC₂H₅)₄, Ti(OC₃H₇)₄, Ti(O-i-C₃H₇)₄, Ti(OC₄H₉)₄, Zr(O-i-C₃H₇), Zr(OC₄H₉)₄, Ti(acetylacetonato)₂(O-i-C₃H₇)₂, Zr(acetylacetonato)₄, Ti(2-ethylhexoxy)₄ und andere Titan- oder Zirkonkomplexe mit Chelatliganden, die vorzugsweise über Sauerstoff und/oder Stickstoff koordiniert sind; Al(OCH₃)₃, Al(OC₂H₅)₃, Al(O-n-C₃H₇)₃, Al(O-i-C₃H₇)₃, Al(OC₄H₉)₃, Al(O-i-C₄H₉)₃, Al(O-sek.-C₄H₉)₃, AlCl₃, AlCl(OH)₂, Aluminiumformiat, Aluminiumacetat und

Aluminiumoxalat sowie die entsprechenden (teilweise) chelatisierten Verbindungen, wie z. B. die Acetylacetonate. Bei Raumtemperatur flüssige Verbindungen, wie z. B. Al(O-sek.-C₄H₉)₃ und Al(O-i-C₃H₇)₃ werden bevorzugt.

Als Material für die Kunststoff-Flaschen kann Cycloolefin-Copolymer (COC) verwendet werden. Bei den Cycloolefin-Copolymeren handelt es sich um Copolymere aus Ethylen und ringförmigen Olefinen. Als Monomere eignen sich unsubstituierte oder substituierte Ethylene. Die ringförmigen Olefin-Monomere leiten sich insbesondere von Dicyclopentadien ab und können ebenfalls unsubstituiert oder substituiert vorliegen. Die Cyloolefin-Copolymere können in Mischung mit Polypropylen, Polyvinylchlorid oder Polyvinylidenchlorid verwendet werden. Bevorzugt werden hochreine Cycloolefin-Copolymere aus substituiertem Ethylen und substituiertem Norbornen verwendet. Diese sind unter dem Handelsnamen Topas® von Ticona erhältlich. Sie zeichnen sich durch eine hohe Bruchfestigkeit, Transparenz, Hitze-, Bestrahlungs- und Chemikalienbeständigkeit aus. Sie sind frei von Ionen und Schwermetallen. Sie können mittels Autoklavierung, Ethylenoxid, gamma- oder Elektronenstrahlung sterilisiert werden. Zudem haben sie ausgeprägte Barriereeigenschaften gegenüber Wasserdampf und Sauerstoff. Beispielsweise zeigen Topas 8007, 6013 oder 6015 eine geringere Wasserdampf- und Sauerstoffpermeabiltät als Polypropylen.

Unter ORMOCER (Organic Modified Ceramics) versteht man anorganisch-organische Hybridpolymere. Es handelt sich dabei um Silikonpolymere, die als Beschichtungsmaterial für Metalle, Gläser, Steine, etc. bekannt sind. Die Herstellung der anorganisch-organischen Hybridpolymere ist beispielsweise in DE 43 03 570 C beschrieben.

Zur Synthese der Hybridpolymere werden funktionalisierte Silane RₘSiX₄₋ₘ eingesetzt, wobei X für eine hydrolisierbare und kondensierbare Gruppe und R für einen vernetzbaren organischen Rest steht. Die Gruppen X können unabhängig voneinander Alkoxy-, Aryloxy-, Acyloxy-, Alkylcarbonyl-, Alkoxycarbonylgruppen, Halogen, Wasserstoff oder substituierte oder unsubstituierte Aminogruppen bedeuten. Der vernetzbare Rest R kann Alkyl-, Alkenyl-, Alkinyl-, Aryl-, Arylalkyl-, Alkylaryl-, Arylalkenyl-, Alkenylaryl-, Arylalkinyl-, Alkinylaryl-, wobei diese Reste durch O-, S- oder N-Atome oder NH-Gruppen unterbrochen sein können, oder endständige OH-, SH- oder NH₂-Gruppen aufweisen können, und ein oder mehrere Substituenten aus der Gruppe der Halogene und der substituierten oder unsubstituierten Amino-, Amid-, Aldehyd-, Keto-, Alkylcarbonyl-, Carboxy-, Mercapto-, Cyano-, Isocyano-, Cyanato-, Isocyänato-, Hydroxy-, Alkoxy-, Alkoxycarbonyl-, Sulfonsäure-, Phosphorsäure-, Acryl-, Acryloxy-, Methacryl-, Methacryloxy-, Epoxy-, Glycidyl-, Glycidyloxy- oder Vinylgruppen tragen können. Die Zahl m kann den Wert 1,2 oder 3 haben. Die Verbindungen RₘSiX₄₋ₘ werden mit Metallverbindungen wie Halogen-, Alkyl-, Alkoxy-, Acyloxy oder Hydroxyverbindungen von Aluminium, Zirkonium oder Titan kombiniert. Die Metallverbindungen können oligomer als Chelatverbindung vorliegen. Es kann sich auch um ein komplexiertes oder unkomplexiertes Aluminiumsalz mit einer organischen oder anorganischen Säure handeln. Das Beschichtungsmaterial enthält neben einem hydrolytischen Kondensat aus RₘSiX₄₋ₘ mit einer Metallverbindung, ein Präpolymer. Die Präpolymere können mit den vernetzbaren Gruppen R reagieren und dienen so der Quervernetzung. Bevorzugt können die Präpolymere reagierende Gruppen haben, die identisch zum Rest R der Verbindung RₘSiX₄₋ₘ sind. Zum Beispiel werden im Falle von acrylgruppenhaltigen Silanen als Präpolymer Acrylate eingesetzt. Das Beschichtungsmaterial kann zudem nichtvernetzbare organofunktionelle Silane, beispielsweise mit Alkyl- oder Arylgruppen, und/oder schwerflüchtige Oxide enthalten.

Herstellung und Anwendung der anorganisch-organischen Hybridpolymere erfolgt durch die Hydrolyse der Ausgangsverbindungen zu einer kolloidalen Lösung, die die abgespaltenen Hydrolyseprodukte, beispielsweise die Alkohole enthält und als Lack bezeichnet wird. Ggf. können auch Lacklösemittel zugesetzt werden. Dieser Lack kann auf das zu beschichtende Material aufgebracht werden. Nachdem das Si-O-Si-Netzwerk gebildet wurde, erfolgt die Vernetzung der organischen Molekülgruppen. Dies kann durch Polymerisations- oder Polyadditionsreaktionen erfolgen.

Als Beschichtungsmaterial können ORMOCER-Lack ABRASIL GA2-30 oder GA2-35 und Ormocer-Lack ABRASIL VM-26-IPA2 verwendet werden. ORMOCER-Lack ABRASIL GA2-30 ist ein thermisch härtender Hybridlack mit hoher Kratzfestigkeit, hoher Feuchte- und Chemikalienbeständigkeit, einer hochglänzenden Oberfläche und einer hohen thermischen Beständigkeit. ABRASIL GA2-35, eine Variante von ABRASIL GA2-30, ist ebenfalls ein thermisch härtender Hybridlack. Bei ABRASIL GA2-35 handelt es sich um eine Zubereitung mit hydrolysierten organisch modifizierten Kieselsäureeestern, hydrolysiertem Aluminiumalkoxid und einem Komplexbildner. Zusätzlich sind ein Epoxidharz und als Lösungsmittel 2-Butanol und Methoxypropanol enthalten. Bei ORMOCER-Lack ABRASIL VM-26-IPA2 handelt es sich um einen UVhärtenden Hybridlack mit hoher Kratzfestigkeit. Bevorzugt werden ORMOCER-Lack ABRASIL GA2-30 und ABRASIL GA2-35 eingesetzt.

Bei den erfindungsgemäßen Kunststoff-Flaschen kann es sich um Durchstechflaschen (=Vial), Schraubverschlußflaschen oder Ampullen handeln.

Die Kunststoff-Flaschen können eine zylindrische Form haben oder eine rechteckige Grundfläche aufweisen. Durchstech- oder Schraubverschlußflaschen können ein Volumen von 1 bis 1000 ml enthalten. Das Volumen der Durchstechflaschen beträgt bevorzugt 2 bis 100 ml. Ampullen können ein Volumen von 1 bis 20 ml enthalten.

Die Kunststoff-Durchstechflaschen können mit Gummistopfen verschlossen werden. Als Material für die Gummistopfen eignen sich Chlorbutyl- oder Brombutylkautschuk-Stopfen. Der Stopfen kann mit einer Kappe aus einem Leichtmetall, beispielsweise aus Aluminium verbördelt werden.

Die Schraubverschlußflaschen können mit einem Schraubverschluß beispielsweise aus Aluminium verschlossen werden.

Die beschichteten Kunststoff-Flaschen können gemäß folgendem Prozess hergestellt werden:
- Beschichtung der COC-Flaschen mit einem ORMOCER-Lack mittels Vakuum-Bedampfung, Tauchen, Fluten, Gießen, Spritzen, Besprühen oder Aufstreichen, bevorzugt durch Besprühen
- Aushärtung des Lacks durch UV- oder IR-Strahlung oder Wärmebehandlung bei 60 bis 150°C, insbesondere bei 130°C

Die Schichtdicke des ORMOCER-Lacks kann 1 bis 100 µm, insbesondere 2 bis 30 µm betragen. Bevorzugt wird eine Schichtdicke von 8 bis 20 µm.

Die beschichteten COC-Flaschen können mit einer pharmazeutischen Zubereitung befüllt werden.

Die beschichteten COC-Flaschen können autoklaviert, strahlensterilisiert oder mit Ethylenoxid sterilisiert werden.

Die sterilisierten COC-Flaschen können in die Abfüllanlage eingespeist werden. Dabei werden sie durch einen Haltering dicht aneinander gepresst, um das Umfallen der Flaschen zu verhindern. Die Flaschen werden mit Hilfe eines Drehtellers auf ein Förderband gegeben, wobei die Flaschen weiterhin dicht gepresst mittels Haltering zusammengehalten werden. Durch die Einwirkung von Drehteller und Haltering reiben die Flaschen aneinander, was zu einem Verkratzen der äußeren Oberfläche bei unbeschichteten Kunststoffflaschen führen würde. Die Flaschen werden per Förderband zu den Abfüllnadeln transportiert, wo sie mit der entsprechenden Flüssigkeit befüllt werden. Anschließend werden die Flaschen mit einem Gummistopfen und Bördelkappe verschlossen.

Die befüllten erfindungsgemäßen Kunststoff-Flaschen können autoklaviert werden. Eine Autoklavierung kann bei einer Temperatur von mindestens 121°C, bei einem Druck von mindestens 2 bar für einen Zeitraum von mindestens 15 min. durchgeführt werden. Alternativ ist eine Autoklavierung bei 110°C und einer längeren Verweildauer im Autoklaven möglich.

Die Erfindung wird durch nachstehendes Beispiel näher erläutert, ohne aber den Erfindungsumfang damit einzuschränken.

### Beispiel 1:

Substrat: Vials aus Topas
Lack: Abrasil GA2-30
Vorbehandlung: Flämmen auf Drehdorn vor Lackieren abwischen mit Aceton und Abblasen mit Druckluft
Applikation: Sprühen
Aushärten: 130°C/1h

Die COC-Fläschchen werden vor dem Lackieren durch Flämmen vorbehandelt. Der Lack Abrasil GA2-30 wird im Sprühverfahren aufgetragen. Die Aushärtung der Lackschicht erfolgt im Ofen bei 130°C/1h. Der Film haftet gut auf der Flaschenoberfläche. Dies zeigt eine Schichthaftungsprüfung mittels Gitterschnitttest (DIN ISO 2409).

Die beschichteten Fläschchen werden in einer Flaschenwaschmaschine gewaschen und in einem Sterilisationstunnel getrocknet. Die Fläschchen werden in einer Abfüll-/Bördelanlage (z.B. VSR F01 der Firma Bosch/Strunk) mit einer Oxaliplatin-Lösung befüllt und anschließend bei mindestens 121°C/2bar/15 min. autoklaviert. Die Fläschchen sind nach Durchgang durch die Abfüllanlage nicht verkratzt.

## Patentansprüche

1. Flasche aus Kunststoff, umfassend oder bestehend aus Cycloolefin-Copolymer, mit einer Beschichtung aus einem anorganisch-organischen Hybrid-Polymer (ORMOCER-Beschichtung).

2. Flasche nach Anspruch 1, wobei das Cycloolefin-Copolymer ein Copolymer von Ethylen und Cycloolefin ist.

3. Flasche nach Anspruch 2, wobei das Ethylen unsubstituiert oder substituiert ist.

4. Flasche nach einem der vorhergehenden Ansprüche, wobei das Cycloolefin Dicylopentadien oder ein Dicyclopentadien-Derivat ist.

5. Flasche nach Anspruch 4, wobei das Dicylopentadien oder Dicyclopentadien-Derivat unsubstituiert oder substituiert ist.

6. Flasche nach einem der vorhergehenden Ansprüche, wobei der Kunststoff umfaßt oder besteht aus einem Gemisch aus dem Cycloolefin-Polymer und einem Polymer aus der durch Polypropylen, Polyvinylchlorid und Polyvinylidenchlorid gebildeten Gruppe.

7. Flasche nach einem der vorhergehenden Ansprüche mit einer Hybrid-Polymer-Beschichtung, umfassend oder bestehend aus
(i) einem hydrolytischen Kondensat, herstellbar aus einem Silan der Formel RₘSiX₄₋ₘ mit den folgenden Bedeutungen:
R = vernetzbarer organischer Rest
X = hydrolisierbare und kondensierbare Gruppe
m = 1 oder 2 oder 3 (wobei 1 bevorzugt ist)
mit einer Metallverbindung,
(ii) einem Präpolymer, das mit den Resten R des Silans vernetzbar ist,
(iii) einem oder mehreren fakultativen nicht-vernetzbaren organofunktionellen Silan(en) und
(iv) einem fakultativen schwerflüchtigen Oxid.

8. Flasche nach Anspruch 7, wobei in der Silan-Formel R ein Rest aus der durch Alkyl, Alkenyl, Alkinyl, Aryl, Arylalkyl, Alkylaryl, Arylalkenyl, Alkenylaryl, Arylalkinyl und Alkinylaryl gebildeten Gruppe ist und wobei diese Reste durch ein O-Atom und/oder ein S-Atom und/oder ein N-Atom und/oder eine NH-Gruppe ein- oder mehrfach unterbrochen sein können, oder endständig eine OH-, SH- oder NH₂-Gruppe aufweisen können.

9. Flasche nach Anspruch 8, wobei in der Silan-Formel die Reste R unabhängig voneinander einen unsubstituierter Rest oder einen Rest bedeuten, der durch ein oder mehrere Substituenten aus der Gruppe substituiert ist, die durch Halogen-Atome, unsubstituierte Amino-, Amid-, Aldehyd-, Keto-, Alkylcarbonyl-, Carboxy-, Mercapto-, Cyan-, Isocyano, Cyanato-, Isocyanato-, Hydroxy-, Alkoxy-, Alkoxycarbonyl-, Sulfonsäure-, Phosphorsäure-, Acryl-, Acryloxy-, Methacryl-, Methacryloxy-, Glycidyl-, Glycidyloxy-, Epoxy- und Vinyl-Gruppen und substituierte derartige Gruppen gebildet wird.

10. Flasche nach einem der Ansprüch 7 bis 9, wobei in der Silan-Formel die Reste X unabhängig voneinander Alkoxy-, Aryloxy-, Acyloxy-, Alkylcarbonyl-, Alkoxycarbonyl-, Hydroxygruppen, Halogen, Wasserstoff oder substituierte oder unsubstituierte Aminogruppen bedeuten.

11. Flasche nach einem der Ansprüche 7 bis 10 mit einem Präpolymer, das eine Gruppe R als reaktive Gruppe trägt, wobei R eine Bedeutung gemäß einem der Ansprüche 7 bis 9 besitzt.

12. Flasche nach Anspruch 11 mit einem Präpolymer, das eine Gruppe R als reaktive Gruppe trägt, wobei R bei dem Präpolymer und bei dem Silan dieselbe Bedeutung besitzt.

13. Flasche nach einem der Ansprüche 7 bis 12, wobei es sich bei dem Silan und bei dem Präpolymer um die folgenden Kombinationen handelt:
(i) Silan mit Epoxygruppen mit Epoxidharz als Präpolymer und/oder
(ii) Silan mit Vinylresten mit Präpolymer mit vernetzbaren Doppelbindungen und/oder
(iii) Silan mit polymerisierbaren Doppelbindungen mit Präpolymer mit vernetzbaren Doppelbindungen und/oder
(iv) mercaptogruppenhaltiges Silan mit Präpolymer mit vernetzbaren Doppelbindungen und/oder
(v) isocyanatgruppenhaltiges Silan mit Polyol als Präpolymer und/oder
(vi) hydroxylgruppenhaltiges Silan mit Isocyanat als Präpolymer und/oder
(vii) aminogruppenhaltiges Silan mit Epoxidharz als Präpolymer.

14. Flasche nach einem der Ansprüche 7 bis 13, mit einem hydrolytischen Kondensat eines acrylgruppen-haltiges Silans und mit einem Präpolymer-Acrylat.

15. Flasche nach einem der Ansprüche 7 bis 14 mit einem fakultativen nicht-vernetzbaren organofunktionellen Silan der Formel R'ₘSiX₄₋ₘ mit den folgenden Bedeutungen:
R'= nicht-vernetzbarer organischer Rest
X = hydrolisierbare und kondensierbare Gruppe
m = 1 oder 2 oder 3.

16. Flasche nach Anspruch 15, wobei in der Silan-Formel R' ein Rest aus der durch Alkyl, Cycloalkyl, Aryl, Arylalkyl und Alkylaryl gebildeten Gruppe ist und wobei diese Reste durch ein O-Atom und/oder ein S-Atom und/oder ein N-Atom und/oder eine NH-Gruppe ein- oder mehrfach unterbrochen sein können oder eine OH-, SH- oder NH₂-Gruppe endständig aufweisen können.

17. Flasche nach Anspruch 15 oder 16, wobei in der Silan-Formel die Reste R' unabhängig voneinander einen unsubstituierter Rest oder einen Rest bedeuten, der durch ein oder mehrere Substituenten aus der Gruppe substituiert ist, die durch Halogen-Atome, unsubstituierte Amid-, Aldehyd-, Keto-, Alkylcarbonyl-, Carboxy-, Cyano-, Alkoxy-, AlkoxycarbonylGruppen und substituierte derartige Gruppen gebildet wird.

18. Flasche nach einem der Ansprüche 15 bis 17, wobei in der Silan-Formel die Reste X unabhängig voneinander Alkoxy-, Aryloxy-, Alkylcarbonyl-, Alkoxycarbonyl-, Hydroxygruppen, Halogen, Wasserstoff oder substituierte oder unsubstituierte Aminogruppen bedeuten.

19. Flasche nach einem der Ansprüche 7 bis 18 mit einem schwerflüchtigen Oxid von Verbindungen von Elementen der Hauptgruppe Ia, IIa, IIIa, IVa und/oder Va oder der Nebengruppe IIb, IIIb, Vb, VIb, VIIb und/oder VIIIb mit Ausnahme von Aluminium.

20. Flasche nach Anspruch 19 mit B₂O₃, P₂O₅ und/oder SnO₂.

21. Flasche nach einem der vorhergehenden Ansprüche mit ABRASIL GA2-30, ABRASIL GA2-35 oder ABRASIL VM-26-IPA2 als Beschichtungsmaterial.

22. Flasche nach einem der vorhergehenden Ansprüche mit zylindrischer oder prismatischer oder quadrischer Form.

23. Flasche nach einem der vorhergehenden Ansprüche, wobei die Flasche eine Durchstechflasche, eine Schraubverschlussflasche oder eine Ampulle ist.

24. Flasche nach Anspruch 22 oder 23 als Durchstechflasche oder Schraubverschlussflasche mit einem Volumen von 1 bis 1000 ml.

25. Flasche nach Anspruch 24 als Durchstechflasche mit einem Volumen von 2 bis 100 ml.

26. Flasche nach Anspruch 22 oder 23 als Ampulle mit einem Volumen von 1 bis 20 ml.

27. Flasche nach einem der vorhergehenden Ansprüche mit einer Beschichtung einer Dicke von 1 bis 100 µm, insbesondere 2 bis 30 µm und vorzugsweise 8 bis 20 µm.

28. Flasche nach einem der vorhergehenden Ansprüche, gefüllt mit einer pharmazeutischen Zubereitung und verschlossen mit einem Verschluß.

## Claims

1. Bottle made of plastics, comprising or consisting of cycloolefin copolymer, having a coating of an inorganic-organic hybrid polymer (ORMOCER coating).

2. Bottle according to claim 1, the cycloolefin copolymer being a copolymer of ethylene and cycloolefin.

3. Bottle according to claim 2, the ethylene being unsubstituted or substituted.

4. Bottle according to any one of the preceding claims, the cycloolefin being dicyclopentadiene or a dicyclopentadiene derivative.

5. Bottle according to claim 4, the dicyclopentadiene or dicyclopentadiene derivative being unsubstituted or substituted

6. Bottle according to any one of the preceding claims, the plastics comprising or consisting of a mixture of the cycloolefin polymer and a polymer from the group formed by polypropylene, polyvinyl chloride and polyvinylidene chloride.

7. Bottle according to any one of the preceding claims having a hybrid polymer coating, comprising or consisting of
(i) a hydrolytic condensate, preparable from a silane of the formula RₘSiX₄₋ₘ having the following meanings:
R = crosslinkable organic radical
X = hydrolysable and condensable group
m = 1 or 2 or 3 (with 1 being preferred) with a metal compound,
(ii) a prepolymer that is crosslinkable with the radicals R of the silane,
(iii) one or more optional non-crosslinkable organofunctional silane(s) and
(iv) an optional low-volatility oxide.

8. Bottle according to claim 7, R in the silane formula being a radical from the group formed by alkyl, alkenyl, alkynyl, aryl, arylalkyl, alkylaryl, arylalkenyl, alkenylaryl, arylalkynyl and alkynylaryl and it being possible for those radicals to be interrupted one or more times by an O atom and/or an S atom and/or an N atom and/or by an NH group, or to have a terminal OH, SH or NH₂ group.

9. Bottle according to claim 8, the radicals R in the silane formula being, independently of one another, an unsubstituted radical or a radical substituted by one or more substituents from the group formed by halogen atoms, unsubstituted amino, amide, aldehyde, keto, alkylcarbonyl, carboxy, mercapto, cyano, isocyano, cyanato, isocyanato, hydroxy, alkoxy, alkoxycarbonyl, sulfonic acid, phosphoric acid, acrylic, acryloxy, methacrylic, methacryloxy, glycidyl, glycidyloxy, epoxy and vinyl groups and such groups in substituted form.

10. Bottle according to any one of claims 7 to 9, the radicals X in the silane formula being, independently of one another, alkoxy groups, aryloxy groups, acyloxy groups, alkylcarbonyl groups, alkoxycarbonyl groups, hydroxy groups, halogen, hydrogen or substituted or unsubstituted amino groups.

11. Bottle according to any one of claims 7 to 10, comprising a prepolymer which carries a group R as reactive group, R having a meaning in accordance with any one of claims 7 to 9.

12. Bottle according to claim 11, comprising a prepolymer which carries a group R as reactive group, R in the prepolymer and in the silane having the same meaning.

13. Bottle according to any one of claims 7 to 12, the silane and the prepolymer being a combination as follows:
(i) silane having epoxy groups with epoxy resin as prepolymer and/or
(ii) silane having vinyl radicals with prepolymer having crosslinkable double bonds and/or
(iii) silane having polymerisable double bonds with prepolymer having crosslinkable double bonds and/or
(iv) mercapto-group-containing silane with prepolymer having crosslinkable double bonds and/or
(v) isocyanate-group-containing silane with polyol as prepolymer and/or
(vi) hydroxyl-group-containing silane with isocyanate as prepolymer and/or
(vii) amino-group-containing silane with epoxy resin as prepolymer.

14. Bottle according to any one of claims 7 to 13, comprising a hydrolytic condensate of an acrylic-group-containing silane and with a prepolymer acrylate.

15. Bottle according to any one of claims 7 to 14, comprising an optional non-crosslinkable organofunctional silane of the formula R'ₘSiX₄₋ₘ having the following meanings:
R' = non-crosslinkable organic radical
X = hydrolysable and condensable group
m = 1 or 2 or 3.

16. Bottle according to claim 15, R' in the silane formula being a radical from the group formed by alkyl, cycloalkyl, aryl, arylalkyl and alkylaryl and it being possible for those radicals to be interrupted one or more times by an O atom and/or an S atom and/or an N atom and/or by an NH group or to have a terminal OH, SH or NH₂ group.

17. Bottle according to claim 15 or 16, the radicals R' in the silane formula being, independently of one another, an unsubstituted radical or a radical substituted by one or more substituents from the group formed by halogen atoms, unsubstituted amide, aldehyde, keto, alkylcarbonyl, carboxy, cyano, alkoxy, alkoxycarbonyl groups and such groups in substituted form.

18. Bottle according to any one of claims 15 to 17, the radicals X in the silane formula being, independently of one another, alkoxy groups, aryloxy groups, alkylcarbonyl groups, alkoxycarbonyl groups, hydroxy groups, halogen, hydrogen or substituted or unsubstituted amino groups.

19. Bottle according to any one of claims 7 to 18, comprising a low-volatility oxide of compounds of elements of main group Ia, IIa, IIIa, IVa and/or Va or of sub-group IIb, IIIb, Vb, VIb, VIIB and/or VIIIb, with the exception of aluminium.

20. Bottle according to claim 19, comprising B₂O₃, P₂O₅ and/or SnO₂.

21. Bottle according to any one of the preceding claims, comprising ABRASIL GA2-30, ABRASIL GA2-35 or ABRASIL VM-26-IPA2 as coating material.

22. Bottle according to any one of the preceding claims, having a cylindrical or prismatic or square shape.

23. Bottle according to any one of the preceding claims, the bottle being an injection bottle, a screw-closure bottle or an ampoule.

24. Bottle according to claim 22 or 23 in the form of an injection bottle or screw-closure bottle having a volume of from 1 to 1000 ml.

25. Bottle according to claim 24 in the form of an injection bottle having a volume of from 2 to 100 ml.

26. Bottle according to claim 22 or 23 in the form of an ampoule having a volume of from 1 to 20 ml.

27. Bottle according to any one of the preceding claims, having a coating having a thickness of from 1 to 100 µm, especially from 2 to 30 µm and preferably from 8 to 20 µm.

28. Bottle according to any one of the preceding claims, filled with a pharmaceutical preparation and closed with a closure.

## Revendications

1. Bouteille en matière plastique, comprenant ou constituée de copolymère de cyclo-oléfine et possédant un revêtement fait d'un polymère hybride organique/ anorganique (revêtement ORMOCER).

2. Bouteille selon la revendication 1, dans laquelle le copolymère de cyclo-oléfine est un copolymère d'éthylène et de cyclo-oléfine.

3. Bouteille selon la revendication 2, dans laquelle l'éthylène est non substitué ou substitué.

4. Bouteille selon l'une des revendications précédentes, dans laquelle la cyclo-oléfine est le dicyclopentadiène ou un dérivé de dicyclopentadiène.

5. Bouteille selon la revendication 4, dans laquelle le dicyclopentadiène ou le dérivé de dicyclopentadiène est non substitué ou substitué.

6. Bouteille selon l'une des revendications précédentes, dans laquelle la matière plastique comprend ou est constituée d'un mélange du polymère de cyclo-oléfine et d'un polymère choisi dans le groupe formé par le polypropylène, le polychlorure de vinyle et le polychlorure de vinylidène.

7. Bouteille selon l'une des revendications précédentes, possédant un revêtement polymère hybride qui comprend ou est constitué de
(i) un produit de condensation hydrolytique qui peut être préparé à partir d'un silane de formule RₘSiX₄₋ₘ, où les symboles ont les significations suivantes :
R = reste organique réticulable,
X = groupe hydrolysable et condensable,
m = 1 ou 2 ou 3 (la valeur 1 étant préférée),
avec un composé métallique,
(ii) un prépolymère réticulable avec les restes R du silane,
(iii)un ou plusieurs silanes organofonctionnels non réticulables facultatifs, et
(iv) un oxyde peu volatil facultatif.

8. Bouteille selon la revendication 7, dans laquelle, dans la formule du silane, R est un reste choisi dans le groupe formé par les radicaux alkyle, alcényle, alcynyle, aryle, arylalkyle, alkylaryle, arylalcényle, alcénylaryle, arylalcynyle et alcynyl-aryle et dans laquelle ces restes peuvent présenter un atome d'oxygène et/ou un atome de soufre et/ou un atome d'azote et/ou un groupe NH intercalé à un ou plusieurs endroits ou bien un groupe OH, SH ou NH₂ en position terminale.

9. Bouteille selon la revendication 8, dans laquelle, dans la formule du silane, les restes R signifient indépendamment les uns des autres un reste non substitué ou bien un reste substitué par un ou plusieurs substituants choisis dans le groupe formé par des atomes d'halogènes, des groupes amino, amido, aldéhyde, céto, alkylcarbonyle, carboxy, mercapto, cyano, isocyano, cyanato, isocyanato, hydroxy, alcoxy, alcoxycarbonyle, acide sulfonique, acide phosphorique, acryle, acryloxy, méthacryle, méthacryloxy, glycidyle, glycidyloxy, époxy et vinyle non substitués, ainsi que des groupes de ce genre substitués.

10. Bouteille selon l'une des revendications 7 à 9, dans laquelle, dans la formule du silane, les restes X signifient indépendamment les uns des autres des groupes alcoxy, aryloxy, acyloxy, alkylcarbonyle, alcoxycarbonyle, hydroxy, un halogène, un hydrogène, ou des groupes amino substitués ou non substitués.

11. Bouteille selon l'une des revendications 7 à 10, comprenant un prépolymère qui porte un groupe R en tant que groupe réactif, R ayant une signification selon l'une des revendications 7 à 9.

12. Bouteille selon la revendication 11, un prépolymère, comprenant un prépolymère qui porte un groupe R en tant que groupe réactif, R ayant la même signification dans le prépolymère et dans le silane.

13. Bouteille selon l'une des revendications 7 à 12, dans laquelle les combinaisons du silane et du prépolymère sont les suivantes :
(i) silane contenant des groupes époxy avec de la résine époxyde en tant que prépolymère, et/ou
(ii) silane contenant des restes vinyle avec un prépolymère comprenant des doubles liaisons réticulables, et/ou
(iii)silane contenant des doubles liaisons polymérisables avec un prépolymère comprenant des doubles liaisons réticulables, et/ou
(iv) silane contenant des groupes mercapto avec un prépolymère comprenant des doubles liaisons réticulables, et/ou
(v) silane contenant des groupes isocyanate avec un polyol en tant que prépolymère, et/ou
(vi) silane contenant des groupes hydroxyle avec un isocyanate en tant que prépolymère, et/ou
(vii)silane contenant des groupes amino avec une résine époxyde en tant que prépolymère.

14. Bouteille selon l'une des revendications 7 à 13, comprenant un produit de condensation hydrolytique d'un silane contenant des groupes acryle et d'un acrylate prépolymère.

15. Bouteille selon l'une des revendications 7 à 14, comprenant un silane organofonctionnel facultatif non réticulable de formule R'ₘSiX₄₋ₘ, où les symboles ont les significations suivantes :
R' = reste organique non réticulable
X = groupe hydrolysable et condensable
m = 1 ou 2 ou 3.

16. Bouteille selon la revendication 15, dans laquelle, dans la formule du silane, R' est un reste choisi dans le groupe formé par les radicaux alkyle, cycloalkyle, aryle, arylalkyle et alkylaryle et dans laquelle ces restes peuvent présenter un atome d'oxygène et/ou un atome de soufre et/ou un atome d'azote et/ou un groupe NH intercalé à un ou plusieurs endroits ou bien un groupe OH, SH ou NH₂ en position terminale.

17. Bouteille selon la revendication 15 ou la revendication 16, dans laquelle, dans la formule du silane, les restes R' signifient indépendamment les uns des autres un reste non substitué ou bien un reste substitué par un ou plusieurs substituants choisis dans le groupe formé par des atomes d'halogènes, des groupes amido, aldéhyde, céto, alkylcarbonyle, carboxy, cyano, alcoxy, alcoxycarbonyle non substitués, ainsi que des groupes de ce genre substitués.

18. Bouteille selon l'une des revendications 15 à 17, dans laquelle, dans la formule du silane, les restes X signifient indépendamment les uns des autres des groupes alcoxy, aryloxy, alkylcarbonyle, alcoxycarbonyle, hydroxy, un halogène, un hydrogène, ou des groupes amino substitués ou non substitués.

19. Bouteille selon l'une des revendications 7 à 18, comprenant un oxyde peu volatil de composés des éléments du groupe principal Ia, IIa, IIIa, IVa et/ou Va ou du groupe secondaire IIb, IIIb, Vb, VIb, VIIb et/ou VIIIb, à l'exception de l'aluminium.

20. Bouteille selon la revendication 19, comprenant du B₂O₃, du P₂O₅ et/ou du SnO₂.

21. Bouteille selon l'une des revendications précédentes, comprenant comme matériau de revêtement de l'ABRASIL GA2-30, de l'ABRASIL GA2-35 ou de l'ABRASIL VM-26-IPA2.

22. Bouteille selon l'une des revendications précédentes, de forme cylindrique ou prismatique ou carrée.

23. Bouteille selon l'une des revendications précédentes, dans laquelle la bouteille est un flacon à perforer, un flacon avec bouchon à vis ou une ampoule.

24. Bouteille selon la revendication 22 ou la revendication 23, sous la forme d'un flacon à perforer ou d'un flacon avec bouchon à vis ayant un volume de 1 à 1000 ml.

25. Bouteille selon la revendication 24, sous la forme d'un flacon à perforer ayant un volume de 2 à 100 ml.

26. Bouteille selon la revendication 22 ou la revendication 23, sous la forme d'une ampoule ayant un volume de 1 à 20 ml.

27. Bouteille selon l'une des revendications précédentes, comprenant un revêtement de 1 à 100 µm, en particulier de 2 à 30 µm et de préférence de 8 à 20 µm d'épaisseur.

28. Bouteille selon l'une des revendications précédentes, remplie d'une préparation pharmaceutique et fermée par un bouchage.
